# EUROPEAN PATENT APPLICATION

(11) **EP 1 284 554 A2**
(43) Date of publication of application: **19.02.2003**
(21) Application number: 02255671.6
(22) Date of filing: 14.08.2002
(51) Int. Cl.: H04L 12/28

(54) **Wireless data communication system and method using wireless transmission frame structure for increasing communication efficiency**

(30) Priority: 14.08.2001 KR 2001049034
(71) Applicant: Samsung Electronics Co., Ltd., Suwon-city, Kyungki-do (KR)
(72) Inventor: Jang, Kyung-hun, Paldal-gu, Suwon-city, Kyungki-do (KR)
(74) Representative: Greene, Simon Kenneth

(57) **Abstract**

A wireless data communication system and method using wireless transmission frame structure for increasing communication efficiency are provided. The wireless transmission frame includes a broadcast period, a downlink period, an uplink period, an acknowledgement period and a contention period so as to perform a wireless data communication between a network access toll center (10) and a plurality of stations (12,14,16). The acknowledgement period is a period in which a plurality of stations (12,14,16) send an acknowledgement signal confirming safe receipt of data transmitted from the network access toll center (10) to the network access toll center (10). Through the acknowledgement period, a network access toll center (10) can send data to each station (12,14,16) and check whether the data is completely transmitted to each station (12,14,16) in the same frame, thereby effectively performing real-time data service. Also, the allocation of a plurality of subcarrier channels to each station minimizes the resending of data because receipt of data is confirmed when at least one of the allocated subcarrier channels is completely transmitted from each station, even if the most part of the subcarrier channels are lost in a wireless interface.

## Description

The present invention relates to a wireless data communication system, and more particularly, to a wireless data communication system and method using wireless transmission frame structure for increasing communication efficiency.

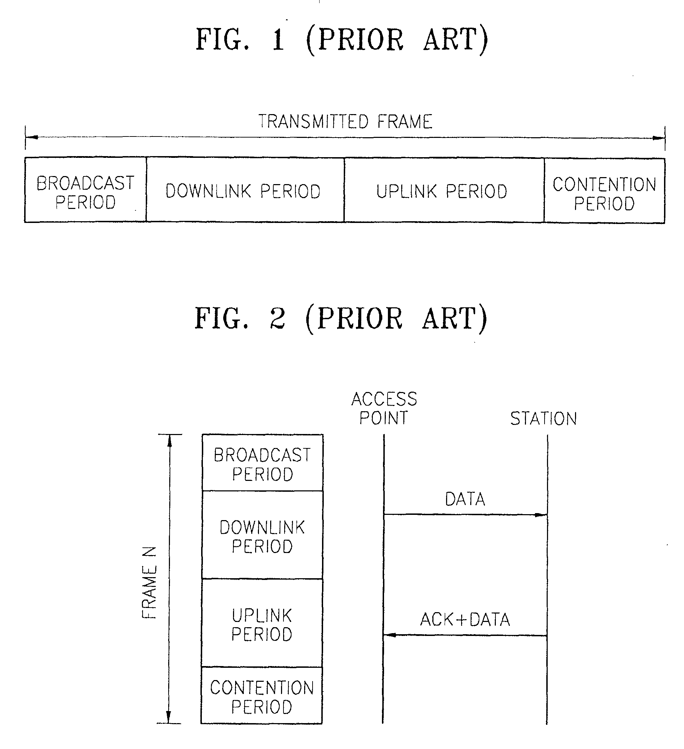

FIG. 1 is a view of a general transmission frame structure, for use in a wireless data system, which includes a broadcast period, a downlink period, an uplink period and a contention period.

Referring to FIG. 1, a network access toll center distributes or allocates an uplink resource to each station that accesses the network access toll center, and each station transmits data to the network access toll center, using the allocated uplink resource. The network access toll center also transmits data to each station via the downlink period.

In general, a wireless data communication system is still less reliable in transmitting data due to the characteristics of its wireless channel than a cable channel. Therefore, unlike in a cable channel, the wireless data communication system requires a resending mechanism to improve the reliability of data transmission in a data link layer. The resending mechanism is based on an acknowledgement signal (hereinafter, denoted as ACK) or ACK timeout.

FIG. 2 is a view illustrating a general method of generating an ACK to be transmitted from each station to a network access toll center. Referring to FIG. 2, the network access toll center uses a downlink period for transmitting data to a certain station. Then, the related station receives the data from the network access toll center via the downlink period, and sends the ACK, which acknowledges receipt of the data, to the network access toll center. At this time, in case that the station has already been allocated with an uplink resource via a broadcast period, the station sends the ACK together with data to the network access toll center, illustrated in FIG. 2.

However, because data stream is asymmetrical in most cases, it is very probable that the station is not allocated with the uplink resource at the time when the ACK is sent to the network access toll center.

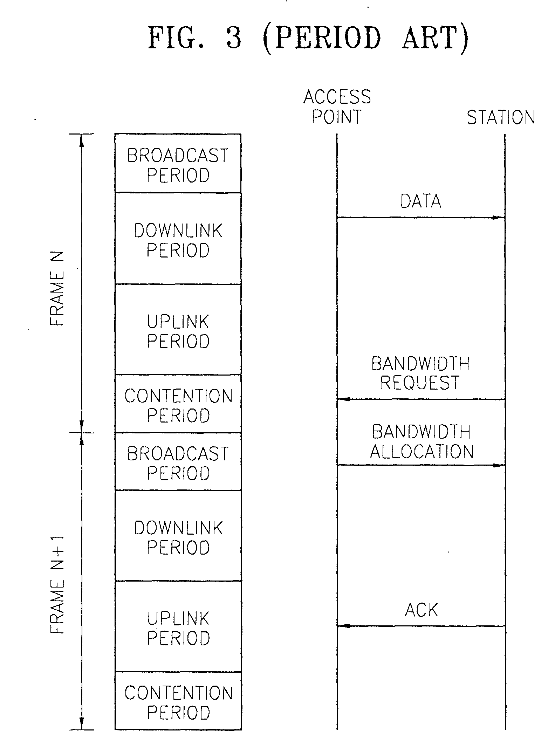

FIG. 3 is a view explaining a process of sending the ACK to a network access toll center when a certain station is not allocated with an uplink resource. Referring to FIG. 3, when a station is not given the uplink resource in a frame N, it requests the network access toll center to allocate an uplink resource for a frame N+1 via a competition period of the frame N, i.e., the station performs a bandwidth request. Once the uplink resource or bandwidth is allocated, the station sends the ACK to the network access toll center in an uplink period of the frame N+1. The station fails to completely receive data from the network access toll center when the bandwidth request or ACK is lost in a wireless interface or the data, which is transmitted from the network access toll center, is lost in transit. In this case, the network access toll center resends the data to the station.

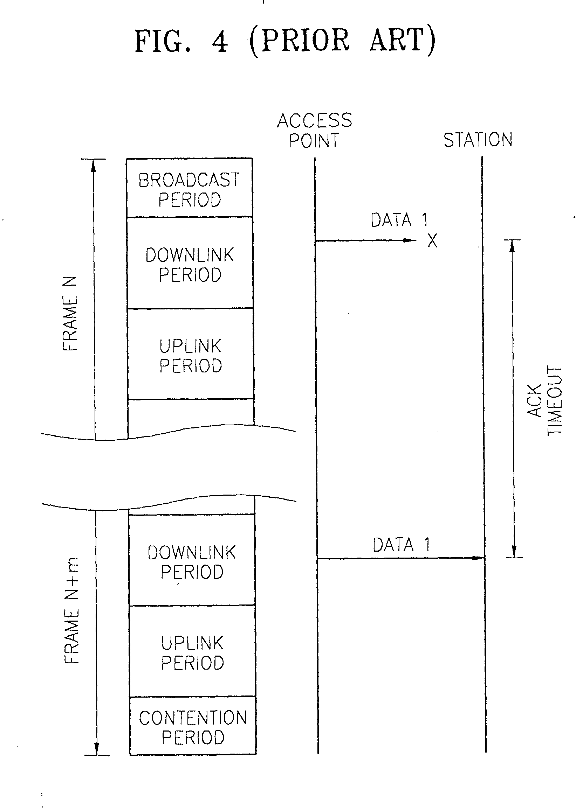

FIG. 4 is a view explaining a process of resending data when data is lost in a wireless interface. Referring to FIG. 4, in case that data transmitted from a network access toll center is lost in a frame N, a station fails to completely receive the data, and thus cannot send the ACK to the network access toll center. If the network access toll center is not given the ACK within a limited time, i.e., the ACK timeout, from the station, the network access toll center considers that the station fails to normally receive the data, and resends the data in a frame N+m.

Here, the ACK timeout is a relatively long time, and therefore, it will take time for the network access toll center to recognize a failure of the transmission of data and resend the data to the station. That is, the immediate resending of data is difficult to be made. For this reason, some research papers suggested not to adopt a resending mechanism for real-time data service, or to set the ACK timeout to be short, but this is insufficient to completely solve the above problem.

According to a first aspect of the invention there is provided a wireless data communication system that performs a wireless data communication between a network access toll center and a plurality of stations. The wireless data communication system performs a wireless data communication using a wireless transmission frame structure including a broadcast period, a downlink period, an uplink period, an acknowledgement period and a contention period. The acknowledgement period is a period in which a plurality of stations send an acknowledgement signal confirming safe receipt of data transmitted from the network access toll center to the network access toll center.

The present invention thus provides a wireless data communication system that transmits data using a new wireless transmission frame structure capable of minimizing the time spent for a network access toll center, within the wireless data communication system, to check if a station receives the data or not.

In a second aspect there is provided a wireless data communication system performing a wireless data communication using a wireless transmission frame structure including a broadcast period, a downlink period, an uplink period, an acknowledgement period and a contention period, the wireless data communication system including a network access toll center for allocating a subcarrier channel to a station that requests access to the network access toll center, and sending data to the station in the downlink period; and a plurality of stations being allocated with the subcarrier channel by the network access toll center when a plurality of stations access the network access toll center, the plurality of stations activating the allocated subcarrier channel after receipt of data from the network access toll center in the downlink period and sending the activated subcarrier channels to the network access toll center in the acknowledgement period, wherein the network access toll center sends new data or resends the data, which was sent in the previous frame, in the next frame, depending on whether the allocated subcarrier channels are activated or not.

The present invention thus provides a wireless data communication system that allows a network access toll center to send data to a station and check whether the data is completely sent to a station in the same frame, and a method therefor.

In a third aspect there is provided a wireless data communication method carried out between a network access toll center and a plurality of stations using a wireless transmission frame structure including a broadcast period, a downlink period, an uplink period, an acknowledgement period and a contention period, the wireless data communication method including (a) the network access toll center allocating at least one subcarrier channel, which is to be used in the acknowledgement period, to stations that request access to the network access toll center, and sending data to the stations in the downlink period; (b) each station, which accesses the network access toll center, activating the subcarrier channel(s), which was given in step (a), in the acknowledgement period when data is completely transmitted to each station from the network access toll center; and (c) the network access toll center checking the activation of the subcarrier channel(s) allocated to each station in the acknowledgement period and determining whether to send new data or resend the data which was sent in step (a) according to the checking result.

It is a third object of the present invention to provide a recording medium that records such a wireless data communication method as a program code that can be executed by a computer.

The above objects and advantages of the present invention will become more apparent by describing in detail preferred embodiments thereof with reference to the attached drawings in which:
FIG. 1 is a view of a general transmission frame structure adopted by a wireless data system;
FIG. 2 is a view for explaining a general method of generating an acknowledgement signal (denoted as ACK) that is to be transmitted from each station to a network access center;
FIG. 3 is a view for explaining a general process of transmitting an ACK to a network access toll center from a station that is not allocated with an uplink resource;
FIG. 4 is a view for explaining a general process of resending data when the data is lost in a wireless interface;
FIG. 5 is a view of a wireless transmission frame structure according to the present invention;
FIG. 6 is a schematic block diagram of a wireless data communication system that performs a data communication using the wireless transmission frame structure of FIG. 5;
FIG. 7 is a flow chart for explaining a wireless data communication method that is performed by the wireless data communication system of FIG. 6; and
FIG. 8 is a view for explaining a process of sending data to each station according to the wireless data communication method of FIG. 7.

A wireless transmission frame structure that increases communication efficiency, a wireless data communication system that performs communication using the wireless transmission frame structure, and a method therefor, are now explained with reference to the accompanying drawings.

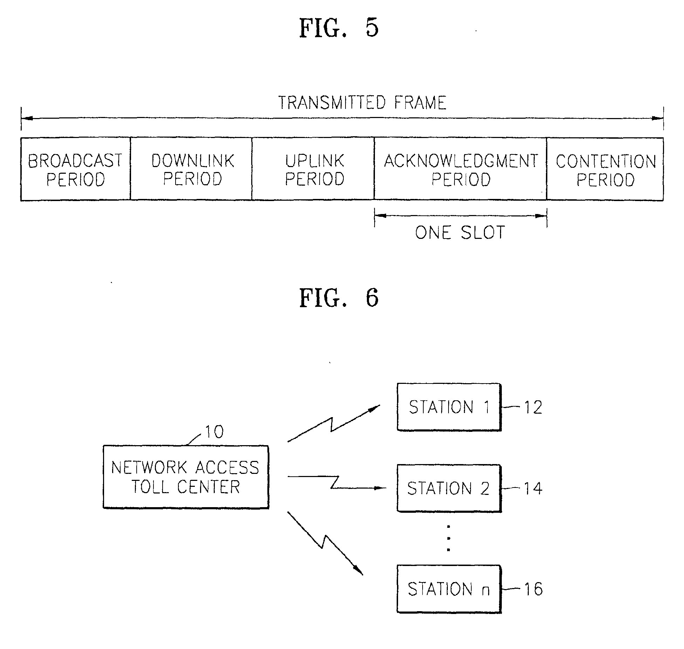

FIG. 5 is a view of a wireless transmission frame structure according to the present invention. Referring to FIG. 5, this wireless transmission frame structure includes a broadcast period, a downlink period, an uplink period, an acknowledgement period, and a contention period.

The acknowledgement period is present between the uplink period and the contention period of the wireless transmission frame, and takes place when a station sends an acknowledgement signal (hereinafter, denoted as ACK) informing a network access toll center of receipt of data. Through the acknowledgement period, the network access toll center can also check if the station normally receives the data in the frame at which the data is transmitted to the station. Preferably, the acknowledgement period is one slot time period.

FIG. 6 is a schematic block diagram of a wireless data communication system that performs a data communication using the wireless transmission frame. This wireless data communication system includes a network access toll center 10 and a plurality of stations 12 through 16.

Referring to FIGS. 5 and 6, the network access toll center 10 allocates a subcarrier channel, which is to be used as the ACK in the acknowledgement period, to a certain station that requests access to the network access toll center. Preferably, at this time, the network access toll center 10 allocates the subcarrier channel to a station that requests real-time data service. In general, an orthogonal frequency division multiplex (OFDM) mode has a plurality of subcarrier channels in a carrier wave. For instance, wireless local area network (WLAN) includes 52 subcarrier channels, and broadband wireless access (BWA) includes 512 or 1024 subcarrier channels. The network access toll center 10 allocates a plurality of subcarrier channels to each station and uses the allocated subcarrier channels as ACK. In other words, the network access toll center 10 allocates subcarrier channels to a station that requests access to the network access toll center, and then sends data to the network-connected stations 12 through 16 in a downlink period via a wireless communication network. Next, the network access toll center 10 checks the activation of the subcarrier channel allocated to each station in the acknowledgement period, and sends new data or resends the data, which was sent in the previous frame, to each station in the next frame.

Each of a plurality of stations 12 through 16 is allocated with the subcarrier channel by the network access toll center 10 when it is connected to the network access toll center 10. If each of a plurality of stations 12 through 16 normally receives data from the network access toll center 10 in the downlink period, it activates the allocated subcarrier channel in the acknowledgement period and sends the activated subcarrier to the network access toll center 10. However, in the event that each station is not normally received the data, it does not activate the allocated subcarrier channel so that it can receive the data again in the next frame.

While the activated subcarrier channel is transmitted from each station to the network access toll center in the acknowledgement period, the activated subcarrier channel may be lost in the wireless communication network due to multi-path fading. This is why the network access toll center 10 allocates a plurality of subcarrier channels to each station. The allocation of a plurality of sub-carrier channels increases the probability that each station receives a subcarrier channel, which is used as ACK. That is, when three subcarrier channels, for example, are allocated to each station, the network access toll center 10 considers each station as receiving data, even if at least one of the three-subcarrier channels is activated.

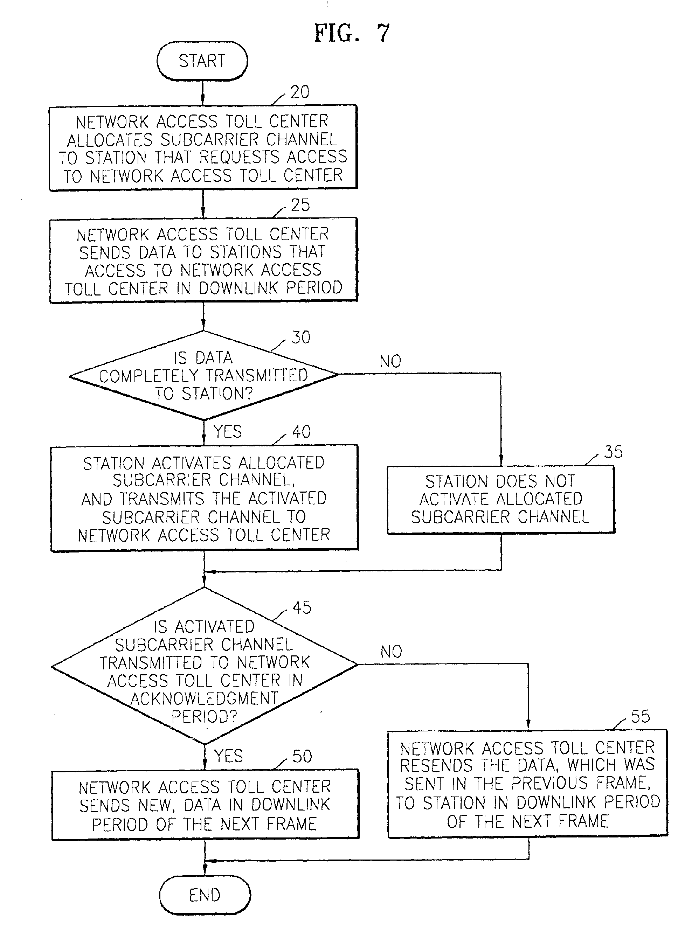

FIG. 7 is a flow chart explaining a preferred embodiment of a wireless data communication method performed by the wireless data communication system of FIG. 6.

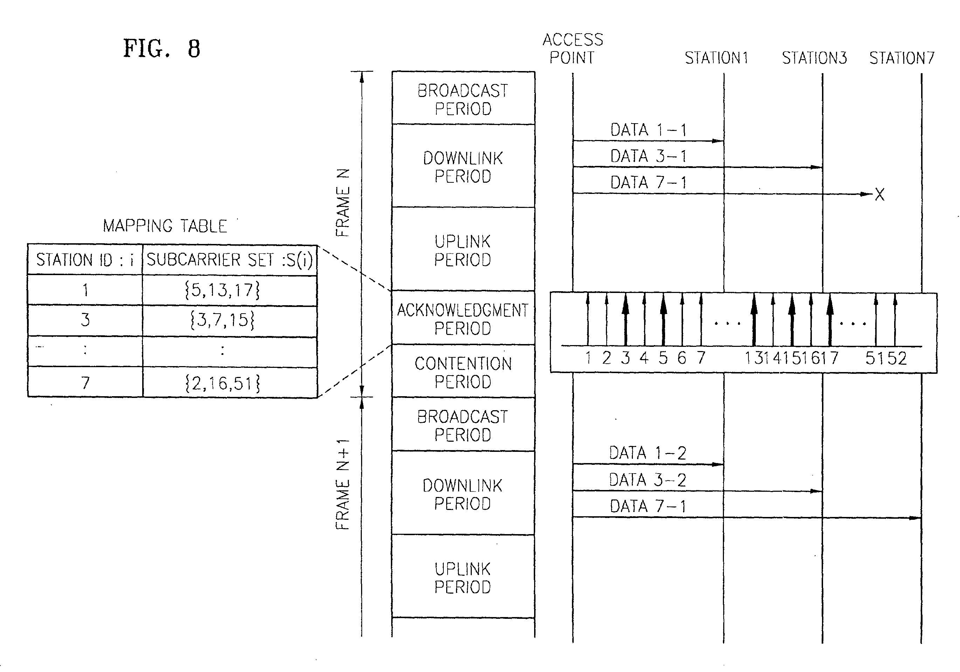

FIG. 8 is a view explaining a process of transmitting data to each station according to the wireless data communication method of FIG. 7. Here, for the sake of convenience, it is assumed that communication is performed in the WLAN, the number of stations that can access a network access toll center is seven, and the first, third and seventh stations now access a network access toll center. Under these assumptions, as shown in the mapping table shown in FIG. 8, the first station is allocated with the fifth, thirteenth and seventeenth subcarrier channels, the third station is allocated with the third, seventh and fifteenth subcarrier channels, and the seventh station is allocated with the second, sixteenth and fifty-first subcarrier channels.

A wireless data communication method will now be described in detail with reference to FIGS. 7 and 8. In step 20, the network access toll center allocates a subcarrier channel, which is the used ACK in an acknowledgement period, to a station that requests access to the network access toll center. Here, the network access toll center may allocate a plurality of subcarrier channels to each station for a loss in a subcarrier channel(s) in the acknowledgement period. In this embodiment, as illustrated in FIG. 8, the number of subcarrier channels to be allocated to each station is set to three, for the sake of convenience.

In step 25, the network access toll center sends data to the first, third and seventh stations that access the network access toll center in a downlink period of a frame. That is, the network access toll center sends data *DATA1-1, DATA3-1* and *DATA7-1* to the first, third and seventh stations in the downlink period of a frame N, respectively, and each station selectively receives the related one of the data *DATA1-1, DATA3-1* and *DATA7-1*.

In step 30, each station connected to the network access toll center checks if the related data is completely transmitted to itself. If the transmission of the data is satisfactorily completed, in step 40, each station activates the subcarrier channels given in step 20 and sends the activated subcarrier channels to the network access toll center in the acknowledgement period of the frame N. However, in the event that the transmission of data is incomplete, in step 35, a station does not activate the subcarrier channels given in step 20. Referring to FIG. 8, the first and third stations receive the data *DATA1-1* and the data *DATA3-1* from the network access toll center, respectively. However, the data *DATA7-1* is lost in transit and therefore, the seventh station does not receive it. Therefore, the first and third stations activate the allocated fifth, thirteenth and seventeenth subcarrier channels, and third, seventh and fifteenth subcarrier channels, respectively, and send them to the network access toll center via the acknowledgement period of the frame N. However, since the seventh station is not given the data, it does not activate the second, sixteenth and fifty-first subcarrier channels allocated in step 20.

In step 45, the network access toll center checks whether the subcarrier channels are activated or not in the acknowledgement period of the frame N, and sends next data, in step 50, to stations in which the given subcarrier channels are activated, i.e., the first and third stations, during a downlink period of a frame N+1. However, the network access toll center resends the data, which was sent during the downlink period of the frame N, in the downlink period of the frame N+1 to a station having inactivated subcarrier channels, i.e., the seventh station, in step 55. More specifically, referring to FIG. 8, the network access toll center checks receipt of the activated subcarrier channels in the acknowledgement period of the frame N, and as a result, recognizes the activation of the third, fifth, thirteenth, fifteenth and seventeenth subcarrier channels. Here, the fifth, thirteenth and seventeenth subcarrier channels are the subcarrier channels allocated to the first station, and the third and fifteenth subcarrier channels are the subcarrier channels allocated to the third station. That is, all of the subcarrier channels allocated to the first station are activated, but one of the subcarrier channels allocated to the third station, i.e., the seventh subcarrier channel, was lost in transit and the other subcarrier channels are activated. Also, none of the subcarrier channels allocated to the seventh station are activated. Thus, the network access toll center considers the first and third stations in which at least one of the subcarrier channels are activated as receiving the data, and the seventh station as failing to completely receive the data.

Thereafter, in the downlink period of the next frame, i.e., the frame N+1, the network access toll center sends new data *DATA1-2* and *DATA3-2* to the first and third stations, and resends the data *DATA7-1* that was sent in the frame N to the seventh station.

As described above, a network access toll center can send data to each station and check whether the data is completely transmitted to each station in the same frame, thereby effectively performing real-time data service. Also, the allocation of a plurality of subcarrier channels to each station minimizes the resending of data because receipt of data is confirmed when at least one of the allocated subcarrier channels is completely transmitted from each station, even if the most part of the subcarrier channels are lost in a wireless interface.

The present invention can be embodied as a computer readable code in a computer readable medium. Here, the computer readable medium may be any recording apparatus capable of storing data that can be read by a computer system, e.g., a read-only memory (ROM), a random access memory (RAM), a compact disc (CD)-ROM, a magnetic tape, a floppy disk, an optical data storage device, and so on. Also, the computer readable medium may be a carrier wave that transmits data via the Internet, for example. The computer readable recording medium can be installed in a computer connected to a network, stored and used as a computer readable code by a distributed computing environment.

While this invention has been particularly described with reference to preferred embodiments thereof, it will be understood by those skilled in the art that various changes in form and details may be made therein without departing from the spirit and scope of the invention as defined by the appended claims.

## Claims

1. A wireless data communication system performing a wireless data communication between a network access toll center and a plurality of stations, the wireless data communication system performs a wireless data communication using a wireless transmission frame structure including a broadcast period, a downlink period, an uplink period, an acknowledgement period and a contention period,
wherein the acknowledgement period is a period in which a plurality of stations send an acknowledgement signal confirming safe receipt of data transmitted from the network access toll center to the network access toll center.

2. The wireless data communication system of claim 1, wherein the acknowledgement period is at least one slot time period.

3. The wireless data communication system of claim 1, wherein the acknowledgement signal comprises at least one subcarrier channel, and
the network access toll center provides the subcarrier channel to each station that requests access to the network access toll center.

4. A wireless data communication system performing a wireless data communication using a wireless transmission frame structure including a broadcast period, a downlink period, an uplink period, an acknowledgement period and a contention period, the wireless data communication system comprising:
a network access toll center for allocating a subcarrier channel to a station that requests access to the network access toll center, and sending data to the station in the downlink period; and
a plurality of stations being allocated with the subcarrier channel by the network access toll center when a plurality of stations access the network access toll center, the plurality of stations activating the allocated subcarrier channel after receipt of data from the network access toll center in the downlink period and sending the activated subcarrier channels to the network access toll center in the acknowledgement period,
wherein the network access toll center sends new data or resends the data, which was sent in the previous frame, in the next frame, depending on whether the allocated subcarrier channels are activated or not.

5. The wireless data communication system of claim 4, wherein the network access toll center allocates the subcarrier channel to a station that requests real-time data service.

6. The wireless data communication system of claim 4, wherein the network access toll center allocates at least two subcarrier channels to a station that requests access to the network access toll center.

7. A wireless data communication method carried out between a network access toll center and a plurality of stations using a wireless transmission frame structure including a broadcast period, a downlink period, an uplink period, an acknowledgement period and a contention period, the wireless data communication method comprising:
(a) the network access toll center allocating at least one subcarrier channel, which is to be used in the acknowledgement period, to stations that request access to the network access toll center, and sending data to the stations in the downlink period;
(b) each station, which accesses the network access toll center, activating the subcarrier channel(s), which was given in step (a), in the acknowledgement period when data is completely transmitted to each station from the network access toll center; and
(c) the network access toll center checking the activation of the subcarrier channel(s) allocated to each station in the acknowledgement period and determining whether to send new data or resend the data which was sent in step (a) according to the checking result.

8. The wireless data communication method of claim 7, wherein during step (a), the network access toll center allocates the subcarrier channels to a station that requests real-time data service.

9. The wireless data communication method of claim 7, wherein in the downlink period of the next frame, the network access toll center sends new data to a station that activates at least one of the allocated subcarrier channels in the acknowledgement period, and resends the data, which was sent in the acknowledgement period in step (a), to a station that does not activate the allocated subcarrier channels.

10. A recording medium for recording the wireless data communication method of claim 7 as a program code that can be executed by a computer.
